# EUROPEAN PATENT SPECIFICATION

(11) **EP 4 520 403 B1**
(45) Date of publication and mention of the grant of the patent: **29.10.2025**
(21) Application number: 23203114.6
(22) Date of filing: 12.10.2023
(51) Int. Cl.: A63B 22/02

(54) **TREADMILL CAPABLE OF HEIGHT ADJUSTING BY MEANS OF FOLDING BLOCK**
LAUFBAND MIT MÖGLICHKEIT ZUM EINSTELLEN DER NEIGUNG DURCH EINEN KLAPPBLOCK
TAPIS ROULANT CAPABLE DE RÉGLER LA HAUTEUR PAR MOYEN D'UN BLOC PLIANT

(30) Priority: 09.09.2023 CN 202322455363 U
(43) Date of publication of application: 12.03.2025
(73) Proprietor: Shenzhen Yile Dynamic Technology Co., LTD, Shenzhen, Guangdong 518000 (CN)
(72) Inventor: LIU, Ren, Shenzhen, 518000 (CN); FAN, Jinsong, Shenzhen, 518000 (CN)
(74) Representative: Zaboliene, Reda

(56) References cited:
- US-A1- 2003 224 910
- US-A1- 2006 142 125
- US-A1- 2007 191 190
- US-A1- 2008 070 756
- US-A1- 2008 188 358
- US-B1- 6 699 160
- US-B1- 6 758 791
- US-B1- 6 905 443

## Description

### TECHNICAL FIELD

The present invention relates to the technical field of treadmills, and in particular to a treadmill capable of adjusting rising and falling by a folding block.

### BACKGROUND

Now people are becoming more and more lazy, and sub-health is becoming more and more serious, which will seriously affect our health for a long time. In fitness exercises, running is a better way of exercise, and a treadmill is good fitness equipment to realize running indoors. Bodybuilders hope that the treadmill can simulate various road conditions, so the slope adjusting function can become the standard of most treadmills. Most of existing slope adjusting functions are driven by a motor, and the shortcomings are that the motor and the matched assemblies are high in cost, resulting in the increasing overall cost of the treadmill. In addition, since the mechanical and circuit structures of the electrical lifting structure are relatively complicated, the later maintenance and repair costs are also relatively high. US2007191190A1 provides a foldable treadmill, which includes a seat, and a two-part tread base having a front carriage pivotally attached to the seat with a pivot axle for allowing the carriage to be rotated relative to the seat, and a rear treadmill frame pivotally secured to the carriage for allowing the treadmill frame to be rotated and folded relative to the carriage, and the carriage is foldable and engageable with the seat for lowering a center of gravity of the treadmill and for preventing the treadmill from falling down when the treadmill frame is rotated and folded relative to the carriage and the seat. A spring biased latch may selectively latch the treadmill frame to the carriage at an upwardly erecting position.

### SUMMARY

An objective of the present invention is to provide a treadmill according to claim 1, capable of adjusting rising
and falling by a folding block, thereby overcoming the shortcomings in the prior art.

To achieve the above objective, the present invention provides the following technical solution. A treadmill capable of adjusting rising and falling by a folding block includes: a running platform; a running frame, configured to bear the running platform;
at least one adjusting mechanism, arranged below the running frame and including a supporting frame and a folding block; and at least two bottom feet, arranged at a bottom of the running frame. The supporting frame is connected to the running frame, the folding block includes a rotating connection part rotatably connected to the supporting frame, and a supporting part is fixedly connected to the rotating connection part. The adjusting mechanism adjusts a slope of the treadmill by the folding block rotatably connected to the supporting frame. A height of each of the at least bottom feet is greater than a height of the supporting frame and less than an adjustable maximum height of the adjusting mechanism.

In one of the embodiments, the folding block is provided with a first limiting part and a second limiting part, the first limiting part being configured to limit a first endpoint in the rotating process of the folding block, and the second limiting part being configured to limit a second endpoint in the rotating process of the folding block; and a rotatable range of the folding block is between the first endpoint and the second endpoint, the treadmill has an adjustable maximum slope in a case that the folding block is located at the first endpoint, and the treadmill has an adjustable maximum slope of the treadmill in a case that the folding block is located at the second endpoint.

In one of the embodiments, the first limiting part is a top of the supporting part, and through press fit between the top of the supporting part and the bottom of the running frame, limits the folding block to continue to rotate in a rotating direction.

In one of the embodiments, the first limiting part is a limiting plate arranged at the top of the supporting part, and through the press fit between one side, close to the supporting frame, of the limiting plate and one side, close to the limiting plate, of the supporting frame, limits the folding block to continue to rotate in a rotating direction.

In one of the embodiments, the second limiting part is one side, facing the bottom of the supporting frame, of the supporting part, and through the press fit between one side, facing the bottom of the supporting frame, of the supporting part and the bottom of the supporting frame, limits the folding block to continue to rotate in a rotating direction.

In one of the embodiments, a roller is arranged at a grounding end of the supporting part.

In one of the embodiments, the supporting part includes a grounding surface with a planar structure; in a case that the grounding surface of the supporting part is in contact and parallel with a supporting surface for placing the treadmill, the treadmill is located at an adjustable maximum slope; and in a case that a distance between one end, away from the supporting frame, of the supporting frame and the supporting surface for placing the treadmill is minimum, the treadmill is located at an adjustable minimum slope.

In one of the embodiments, in a case that the treadmill is located at the adjustable maximum slope, a position where the supporting frame is rotatably connected to the folding block is located over the grounding surface.

In one of the embodiments, the supporting frame is connected to the rotating connection part through a rotating shaft; one end, connected to the rotating connection part, of the supporting frame is of an arc shape, and the axis of the rotating shaft coincides with the circle center of the arc shape; and the supporting part is provided with a braking surface tangent to an arc-shaped end face of the supporting frame, and the braking surface is in interference fit with the arc-shaped end face, so that when the folding block rotates around the rotating shaft, a braking force is formed through a friction force between the braking surface and the arc-shaped end face.

In one of the embodiments, a roller is arranged at one end, away from the running frame, of the supporting frame.

In one of the embodiments, an anti-skid pad is arranged on the grounding surface of the supporting part.

Compared with the prior art, the present application has the following advantages: a slope adjusting mechanism of the present application adopts a manual mode for adjustment, and is simple in structure and relatively low in later maintenance and repair costs; secondly, compared with an electrical lifting mechanism, the manufacturing cost of the present application is also relatively low; and thirdly, the present application adopts a mechanical structure, and compared with the electrical lifting mechanism and a corresponding circuit structure, the failure rate of the present application is also relatively low.

### BRIEF DESCRIPTION OF THE DRAWINGS

The drawings of the specification that constitutes a part of the present application are used to provide a further understanding of the present invention. The exemplary embodiments of the present invention and the description thereof are used to explain the present invention, and do not constitute an improper limitation of the present invention. In the drawings:
FIG. 1 is a schematic diagram of an overall structure according to an embodiment of the present invention;
FIG. 2 is a structural schematic diagram of a first state of Embodiment 1 of the present invention;
FIG. 3 is a structural schematic diagram of a second state of Embodiment 1 of the present invention;
FIG. 4 is a structural schematic diagram of an adjusting mechanism of Embodiment 2 of the present invention;
FIG. 5 is a structural schematic diagram of a first state of Embodiment 3 of the present invention;

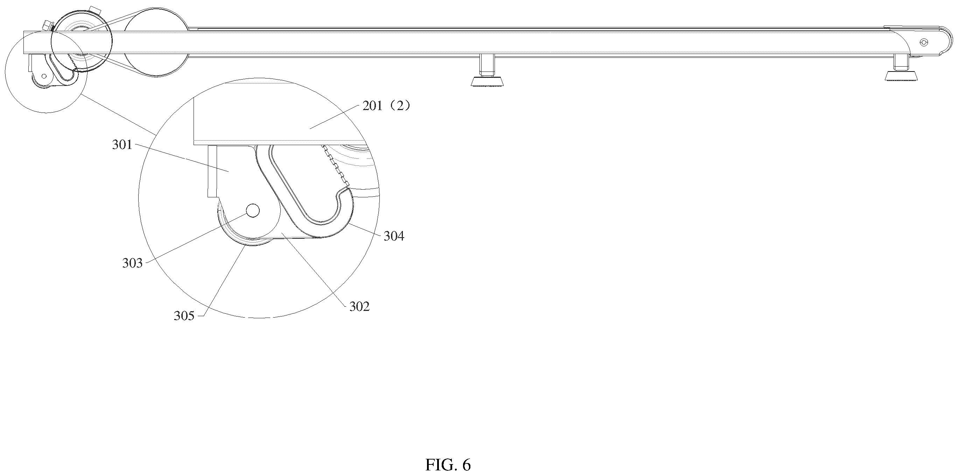

FIG. 6 is a structural schematic diagram of a second state of Embodiment 3 of the present invention; and
FIG. 7 is a structural schematic diagram of an adjusting mechanism of Embodiment 3 of the present invention.

Description of reference numerals: 1-running platform; 101-running belt; 102-roller; 103-running motor; 2-running frame; 201-first border; 202-second border; 203-cross frame; 3-adjusting mechanism; 301-supporting frame; 302-rotating connection part; 303-rotating shaft; 304-supporting part; 305-first limiting part; 306-second limiting part; 307-roller; 308-limiting plate; 309-braking surface; 310-anti-skid pad; 4-bottom foot.

### DETAILED DESCRIPTION OF THE EMBODIMENTS

The present invention will be described in detail below with reference to the accompanying drawings and in conjunction with embodiments. Various examples are provided by way of interpretation of the present invention and are not intended to limit the present invention. Indeed, it will be apparent to those skilled in the art that modifications and variations may be made in the present invention without departing from the scope of the present invention. For example, features shown or described as part of one embodiment may be used in another embodiment to produce yet another embodiment.

In the description of the present invention, the terms "longitudinal", "transverse", "up", "down", "front", "back", "left", "right", "vertical", "horizontal", "top", "bottom" and the like denote orientation or positional relationships based on those shown in the drawings and are intended for ease of description only and not to require that the present invention is necessarily constructed and operated in a particular orientation and therefore cannot be construed as limiting to the present invention. The terms "connection", "connect" and "set" used in the present invention should be understood in a broad sense, for example, which may refer to a fixed connection or a detachable connection; which may refer to a direct connection or an indirect connection through intermediate components; which may refer to a wired electrical connection, a radio connection, or a wireless communication signal connection, and the specific meanings of the above terms may be understood by those of ordinary skill in the art according to a specific situation.

One or more examples of the present invention are shown in the accompanying drawings. The detailed description uses numeric and letter marks to refer to features in the drawings. Similar or like reference signs in the drawings and descriptions have been used to refer to similar or like parts of the present invention. As used herein, the terms "first", "second" and "third" and the like are used interchangeably to distinguish one member from another and are not intended to denote the location or importance of individual members.

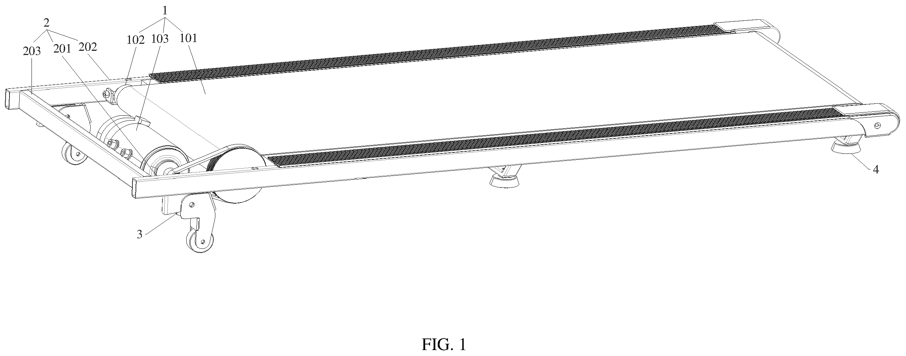

As shown in FIG. 1, according to the embodiments of the present invention, a treadmill capable of adjusting rising and falling by a folding block is provided and includes a running platform 1 and a running frame 2. The running platform 1 is provided with a running belt 101, rollers 102 arranged at two ends of the running belt 101, and at least one running motor 103 for providing a driving force to at least one roller 102. The running frame 2 is a carrier of the running platform 1 and supports the running platform 1.

According to the present application, an adjusting mechanism 3 for adjusting the slope of the treadmill is arranged at the bottom of the running frame 2. In the following embodiments, the running frame 2 is arranged on a side surface of the running platform 1, and a supporting surface for placing the treadmill is the ground.

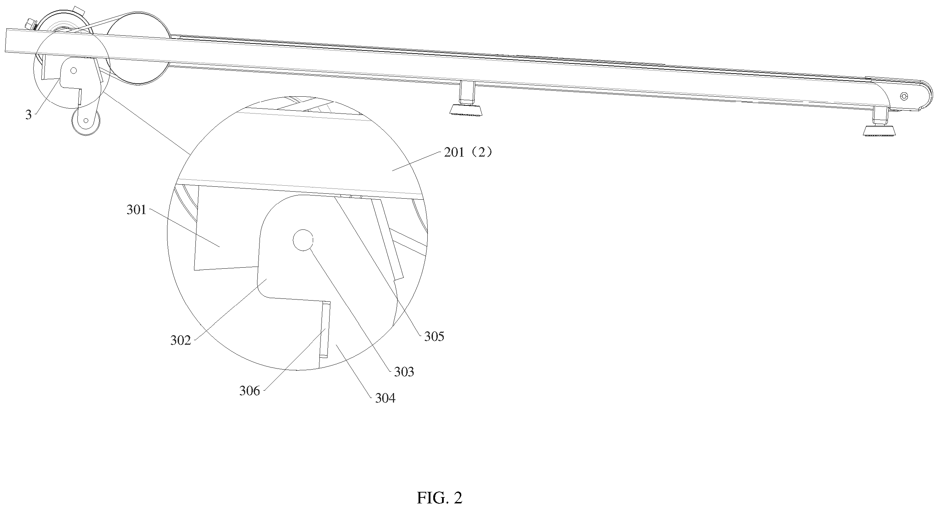

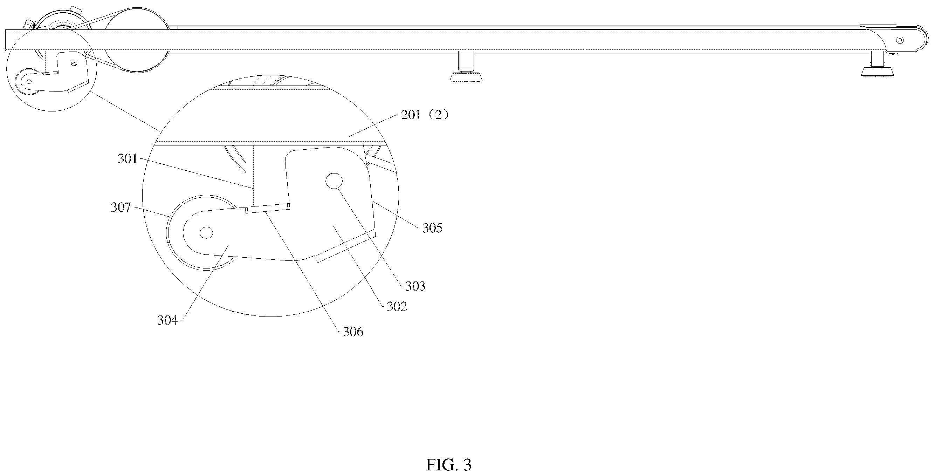

In Embodiment 1, referring to FIG. 2 and FIG. 3, at least one adjusting mechanism 3 is arranged at the bottom of one end of the running frame 2, and under normal conditions, the adjusting mechanism 3 is arranged at the tail end close to a heading direction of the running belt 101. The adjusting mechanism 3 includes a supporting frame 301, the top of the supporting frame 301 is connected to the running frame 2, and the supporting frame 301 is rotatably connected to a folding block. The folding block is provided with a rotating connection part 302, the rotating connection part 302 is connected to the supporting frame 301 through a rotating shaft 303, and the rotating connection part 302 is provided with a supporting part 304 which rotates around the rotating shaft 303. A top surface of the rotating connection part 302 is a first limiting part 305, and the first limiting part 305 is configured to limit a first endpoint in the rotating process of the folding block. A second limiting part 306 is arranged on one side, facing the bottom of the supporting frame 301, of the supporting part 304. The second limiting part 306 is configured to limit a second endpoint in the rotating process of the folding block. A rotatable range of the folding block is between the first endpoint and the second endpoint. In this embodiment, the treadmill has an adjustable maximum slope in a case that the folding block rotates to the first endpoint; and the treadmill has an adjustable minimum slope in a case that the folding block rotates to the second endpoint.

Specifically, in this embodiment, the running frame 2 includes a first border 201 and a second border 202 which are arranged on two sides of a heading direction of the running belt 101; and an adjusting mechanism 3 is arranged at the bottom of each of the first border 201 and the second border 202. Taking the first border 201 as an example, the top of the supporting frame 301 is fixedly connected to the first border 201, and the folding block is rotatably connected to the supporting frame 301 through the rotating shaft 303. When the folding block rotates to the first endpoint anticlockwise, the top surface of the rotating connection part 302 abuts against the bottom of the first border 201, and at this time, the folding block is limited to the first endpoint and cannot continue to rotate, and the treadmill is located at the adjustable maximum slope; and when the folding block rotates to the second endpoint clockwise, one side, facing the supporting frame 301, of the supporting part 304 abuts against the bottom of the supporting frame 301, and at this time, the folding block is limited at the second endpoint and cannot continue to rotate, and the treadmill is located at the adjustable minimum slope.

When the treadmill is located at the adjustable maximum slope, the top surface of the rotating connection part 302 is in face-to-face contact with the bottom surface of the first border 201, so that the treadmill is more stable during use.

To facilitate the movement of the treadmill, a roller 307 is arranged at the tail end of the supporting part 304.

In some embodiments, the adjustable maximum slope value and the adjustable minimum slope value of the treadmill are the maximum slope value or the adjacent maximum slope value, the minimum slope value or the adjacent minimum slope value which may appear in the treadmill in the rotating process of the folding block. The adjustable maximum/minimum slope value is a corresponding slope value in a stable state of the treadmill, or a corresponding slope value based on design consideration.

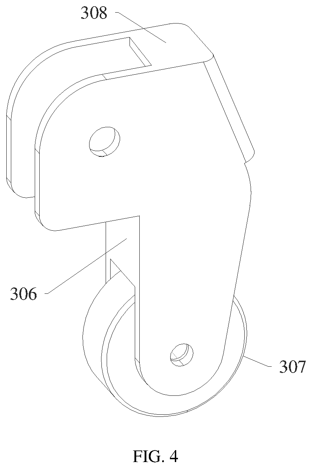

In Embodiment 2, referring to FIG. 4, based on Embodiment 1, the first limiting part 305 is a limiting plate 308 arranged at the top of the rotating connection part 302. When the folding block rotates to the first endpoint anticlockwise, one end, close to the supporting frame 301, of the limiting plate 308 abuts against the side surface of the supporting frame 301, and at this time, the folding block is limited at the first endpoint and cannot continue to rotate, and the treadmill is located at the adjustable maximum slope. In some embodiments, the second limiting part 306 and the supporting part 304 may be integrated structure design shown in this embodiment.

In Embodiment 1 and Embodiment 2, the structures and the connection relationship of the first limiting part 305 and the second limiting part 306 in the folding block depend on the technical solution, and are not limited to the technical solution for examples in the embodiments.

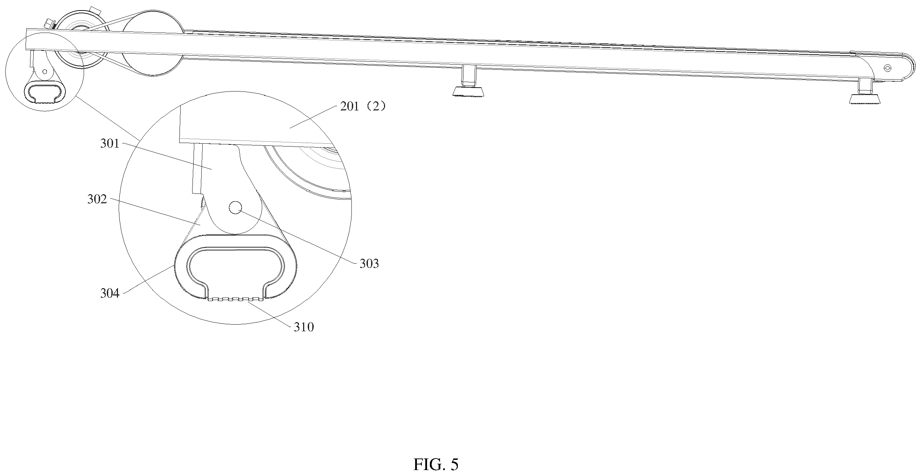

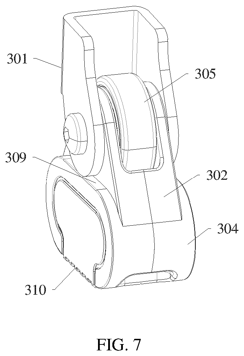

In Embodiment 3, referring to FIG. 5 and FIG. 7, at least one adjusting mechanism 3 is arranged at the bottom of one end of the running frame 2, and under normal conditions, the adjusting mechanism 3 is arranged at the tail end close to a heading direction of the running belt 101. The adjusting mechanism 3 includes a supporting frame 301, the top of the supporting frame 301 is connected to the running frame 2, and the supporting frame 301 is rotatably connected to a folding block. The folding block is provided with a rotating connection part 302, and the rotating connection part 302 is connected to the supporting frame 301 through a rotating shaft 303. One end, connected to the rotating connection part 302, of the supporting frame 301 is of an arc shape, and the rotating shaft 303 is the circle center of the arc shape. The rotating connection part 302 is of an isosceles triangle structure; the supporting part 304 is arranged at the bottom of the isosceles triangle structure of the rotating connection part 302; and a shaft hole, in shaft connection with the supporting frame 301, of the rotating connection part 302 is arranged on the apical angle bisector of the isosceles triangle structure of the rotating connection part 302. The grounding surface of the supporting part 304 is perpendicular to the apical angle bisector of the isosceles triangle structure of the rotating connection part 302. When the folding block rotates around the supporting frame 301 to the grounding surface of the supporting part 304 to be parallel with the ground, the treadmill is located at the adjustable maximum slope; and when the folding block rotates around the supporting frame 301 to one end of the arc shape of the supporting frame 301 to be in contact with the ground, the treadmill is located at the adjustable minimum slope.

Specifically, in this embodiment, the running frame 2 includes a first border 201 and a second border 202 which are arranged on two sides of a heading direction of the running belt 101; and a cross frame 203 is arranged between the first border 201 and the second border 202, and the cross frame 203 is arranged at the tail end close to the heading direction of the running belt 101. An adjustable mechanism 3 is arranged at each of two ends of the cross beam, the top of the supporting frame 301 is fixedly connected to the cross frame 203, and the folding block is in transmission connection with the supporting frame 301 through the rotating shaft 303. When the folding block rotates to the grounding surface of the supporting part 304 to be parallel with the ground, at this time, the treadmill is located at the adjustable minimum slope; and when the folding block rotates around the supporting frame 301 to one end of the arc shape of the supporting frame 301 to be in contact with the ground, the treadmill is located at the adjustable minimum slope.

Several bottom feet 4 may be arranged at the bottom of the running frame 2; and a height of each of the bottom feet 4 may be slightly greater than a height of the supporting frame 301, but less than an adjustable maximum height of the adjusting mechanism 3. The objective is that when the treadmill is located at the adjustable minimum slope, a lower end of the supporting frame 301 is not in direct contact with the ground.

To facilitate the movement of the treadmill, the supporting frame 301 is provided with a roller 307. A preferred solution is that the roller 307 and the rotating connection part 302 are coaxially mounted on the supporting frame 301. In this embodiment, when the treadmill is located at the adjustable minimum slope, optionally, the roller 307 may be in direct contact with the ground.

Since the folding block is rotatably connected to the supporting frame 301, except that the treadmill is located in a state of the adjustable maximum slope, the folding block may interfere with some operations of the treadmill without constraints. Therefore, a braking surface 309 is arranged at the top of the supporting part 304, and the braking surface 309 is in interference fit with an end face of an arc-shaped end part of the supporting frame 301. When the folding block rotates around the supporting frame 301, a braking force is formed through a friction force between the braking surface 309 of the supporting part 304 and the end face of the supporting frame 301. Under the constraint of the braking force, the folding block may maintain a relatively fixed state to avoid the above interference.

Of course, in this embodiment, the rotating connection part 302 is not limited to an isosceles triangle, a rectangle or other polygons. In the technical solution of this embodiment, the rotating shaft 303 is arranged on a perpendicular line of the grounding surface of the supporting part 304.

To improve the stability of the supporting part 304, the grounding surface of the supporting part 304 is provided with an anti-skid pad 310.

All the above embodiments are required to consider the mechanical structure relationship and analyze whether a moment under a specific structure affects the stability of the treadmill after the slope is adjusted. The structural position relationship is adjusted according to the specific slope, so that the treadmill is in the best stable state under the compliant use state.

The foregoing is merely a preferred embodiment of the present invention and is not intended to limit the present invention which may be subject to various modifications and variations to those skilled in the art.

The invention is defined by the appended claims.

## Claims

1. A treadmill capable of adjusting rising and falling by means of a folding block, comprising a running platform (1),
further comprising:
a running frame (2), configured to bear the running platform (1);
at least one adjusting mechanism (3), arranged below the running frame (2) and comprising a supporting frame (301) and a folding block, the supporting frame (301) being connected to the running frame (2), the folding block comprising a rotating connection part (302) rotatably connected to the supporting frame (301) and a supporting part (304) fixedly connected to the rotating connection part (302), the adjusting mechanism (3) adjusting a slope of the treadmill by the folding block rotatably connected to the supporting frame (301);
wherein the supporting part (304) comprises a grounding surface (310) with a planar structure;
in a case that the grounding surface (310) of the supporting part (304) is in contact and parallel with the ground for placing the treadmill, the treadmill is located at an adjustable maximum slope; and
in a case that a distance between one end, away from the running frame (2), of the supporting frame (301) and the ground for placing the treadmill is minimum, the treadmill is located at an adjustable minimum slope;
wherein the supporting frame (301) is connected to the rotating connection part (302) through a rotating shaft (303);
one end, connected to the rotating connection part (302), of the supporting frame (301) is of an arc shape, and the axis of the rotating shaft (303) coincides with the circle center of the arc shape; and
the supporting part (304) is provided with a braking surface (309) tangent to an arc-shaped end face of the supporting frame (301), and the braking surface (309) is in interference fit with the arc-shaped end face, so that when the folding block rotates around the rotating shaft (303), a braking force is formed through a friction force between the braking surface (309) and the arc-shaped end face.

2. The treadmill according to claim 1, **characterized in that**
the folding block is provided with a first limiting part (305) and a second limiting part (306), the first limiting part (305) being configured to limit a first endpoint in the rotating process of the folding block, and the second limiting part (306) being configured to limit a second endpoint in the rotating process of the folding block; and
a rotatable range of the folding block is between the first endpoint and the second endpoint,
the treadmill has an adjustable maximum slope in a case that the folding block is located at the first endpoint, and
the treadmill has an adjustable minimum slope in a case that the folding block is located at the second endpoint.

3. The treadmill according to claim 2, **characterized in that**
the first limiting part (305) is a top of the supporting part (304), and through press fit between the top of the supporting part (304) and the bottom of the running frame (2), limits the folding block to continue to rotate in a rotating direction; or/and
the first limiting part (305) is a limiting plate (308) arranged at the top of the supporting part (304), and through the press fit between one side, close to the supporting frame (301), of the limiting plate (308) and one side, close to the limiting plate (308), of the supporting frame (301), limits the folding block to continue to rotate in a rotating direction; or/and
the second limiting part (306) is one side, facing the bottom of the supporting frame (301), of the supporting part (304), and through the press fit between one side, facing the bottom of the supporting frame (301), of the supporting part (304) and the bottom of the supporting frame (301), limits the folding block to continue to rotate in a rotating direction.

4. The treadmill according to claim 2, **characterized in that**
a roller (307) is arranged at a grounding end of the supporting part (304).

5. The treadmill according to claim 1, **characterized in that**
in a case that the treadmill is located at the adjustable maximum slope, a position where the supporting frame (301) is rotatably connected to the folding block is located over the grounding surface (310).

6. The treadmill according to claim 1, **characterized in that**
a roller (307) is arranged at one end, away from the running frame (2), of the supporting part (301).

7. The treadmill according to claim 1, **characterized in that**
an anti-skid pad (310) is arranged on the grounding surface of the supporting part (304).

8. The treadmill according to claim 1, **characterized in that** at least two bottom feet (4) are arranged at a bottom of the running frame (2).

## Patentansprüche

1. Ein Laufband, das in der Lage ist, das Steigen und Fallen mittels eines Klappblocks einzustellen, umfassend eine Laufplattform (1),
ferner umfassend:
einen Laufrahmen (2), der zur Aufnahme der Laufplattform (1) ausgebildet ist;
mindestens einen Verstellmechanismus (3), der unterhalb des Laufrahmens (2) angeordnet ist und einen Tragrahmen (301) sowie einen Klappblock umfasst; wobei der Tragrahmen (301) mit dem Laufrahmen (2) verbunden ist; der Klappblock ein drehbares Verbindungsteil (302), das drehbar mit dem Tragrahmen (301) verbunden ist, sowie ein fest mit dem drehbaren Verbindungsteil (302) verbundenes Stützteil (304) umfasst; der Verstellmechanismus (3) die Neigung des Laufbands durch den drehbar mit dem Tragrahmen (301) verbundenen Klappblock einstellt;
**dadurch gekennzeichnet, dass** das Stützteil (304) eine Erdungsfläche mit planarer Struktur aufweist;
in einem Fall, in dem die Erdungsfläche des Stützteils (304) in Kontakt und parallel zum Boden für die Platzierung des Laufbands steht, befindet sich das Laufband in einer einstellbaren maximalen Neigung; und
in einem Fall, in dem ein Abstand zwischen einem vom Laufrahmen (2) abgewandten Ende des Tragrahmens (301) und dem Boden für die Platzierung des Laufbands minimal ist, befindet sich das Laufband in einer einstellbaren minimalen Neigung;
wobei der Tragrahmen (301) durch eine Drehwelle (303) mit dem drehbaren Verbindungsteil (302) verbunden ist;
ein mit dem drehbaren Verbindungsteil (302) verbundenes Ende des Tragrahmens (301) bogenförmig ausgestaltet ist, und die Achse der Drehwelle (303) mit dem Kreismittelpunkt der Bogenform zusammenfällt; und
das Stützteil (304) eine zur bogenförmigen Endfläche des Tragrahmens (301) tangentiale Bremsfläche (309) aufweist, wobei die Bremsfläche (309) formschlüssig mit der bogenförmigen Endfläche in Eingriff steht, sodass beim Drehen des Klappblocks um die Drehwelle (303) eine Bremskraft durch Reibung zwischen der Bremsfläche (309) und der bogenförmigen Endfläche gebildet wird.

2. Laufband nach Anspruch 1, wobei
der Klappblock ein erstes Begrenzungsteil (305) und ein zweites Begrenzungsteil (306) aufweist; wobei das erste Begrenzungsteil (305) konfiguriert ist, einen ersten Endpunkt im Drehprozess des Klappblocks zu begrenzen, und das zweite Begrenzungsteil (306) konfiguriert ist, einen zweiten Endpunkt im Drehprozess des Klappblocks zu begrenzen;
ein drehbarer Bereich des Klappblocks zwischen dem ersten Endpunkt und dem zweiten Endpunkt liegt,
das Laufband die einstellbare maximale Neigung aufweist, wenn der Klappblock am ersten Endpunkt positioniert ist, und
das Laufband die einstellbare minimale Neigung aufweist, wenn der Klappblock am zweiten Endpunkt positioniert ist.

3. Laufband nach Anspruch 2, wobei
das erste Begrenzungsteil (305) eine Oberseite des Stützteils (304) ist und durch Presspassung zwischen der Oberseite des Stützteils (304) und einer Unterseite des Laufrahmens (2) das weitere Drehen des Klappblocks in eine Drehrichtung begrenzt; und/oder
das erste Begrenzungsteil (305) eine an der Oberseite des Stützteils (304) angeordnete Begrenzungsplatte (308) ist und durch Presspassung zwischen einer dem Tragrahmen (301) zugewandten Seite der Begrenzungsplatte (308) und einer der Begrenzungsplatte (308) zugewandten Seite des Tragrahmens (301) das weitere Drehen des Klappblocks in eine Drehrichtung begrenzt; und/oder
das zweite Begrenzungsteil (306) eine einer Unterseite des Tragrahmens (301) zugewandte Seite des Stützteils (304) ist und durch Presspassung zwischen dieser Seite des Stützteils (304) und der Unterseite des Tragrahmens (301) das weitere Drehen des Klappblocks in eine Drehrichtung begrenzt.

4. Laufband nach Anspruch 2, wobei
eine Rolle (307) an einem Erdungsende des Stützteils (304) angeordnet ist.

5. Laufband nach Anspruch 1, wobei
im Fall, dass das Laufband in der einstellbaren maximalen Neigung positioniert ist, eine Position, an der der Tragrahmen (301) drehbar mit dem Klappblock verbunden ist, oberhalb der Erdungsfläche liegt.

6. Laufband nach Anspruch 1, wobei
eine Rolle (307) an einem vom Laufrahmen (2) abgewandten Ende des Stützteils (304) angeordnet ist.

7. Laufband nach Anspruch 1, wobei
ein Anti-Rutsch-Pad (310) auf der Erdungsfläche des Stützteils (304) angebracht ist.

8. Laufband nach Anspruch 1, wobei
mindestens zwei Bodenzapfen (4) an einer Unterseite des Laufrahmens (2) angeordnet sind.

## Revendications

1. Tapis de course apte à ajuster la montée et la descente au moyen d'un bloc pliant, comprenant une plate-forme de course (1),
comprenant en outre :
un châssis de course (2), configurée pour supporter la plate-forme de course (1) ;
au moins un mécanisme de réglage (3), disposé sous le châssis de course (2) et comprenant un cadre de support (301) et un bloc pliant, le cadre de support (301) étant relié au châssis de course (2), le bloc pliant comprenant une partie de liaison rotative (302) reliée de manière rotative au cadre de support (301) et une partie de support (304) reliée de façon fixe à la partie de liaison rotative (302), le mécanisme de réglage (3) ajustant une pente du tapis de course au moyen du bloc pliant relié de manière rotative au cadre de support (301) ;
lequel partie de support (304) comprend une surface d'appui au sol de structure plane;
dans le cas où la surface d'appui au sol de la partie de support (304) est en contact et parallèle au sol sur lequel le tapis de course est placé, le tapis de course est positionné à une pente maximale réglable ; et
dans le cas où la distance entre une extrémité, éloignée du châssis de course (2), du cadre de support (301) et le sol de pose du tapis de course est minimale, le tapis de course est positionné à une pente minimale réglable ;
le cadre de support (301) étant relié à la partie de liaison rotative (302) par un arbre de rotation (303) ;
une extrémité, reliée à la partie de liaison rotative (302), du cadre de support (301) ayant une forme arquée, et l'axe de l'arbre de rotation (303) coïncidant avec le centre du cercle de ladite forme arquée ;
et la partie de support (304) étant pourvue d'une surface de freinage (309) tangente à une face d'extrémité arquée du cadre de support (301), ladite surface de freinage (309) étant en ajustement serré avec la face d'extrémité arquée, de sorte que lorsque le bloc pliant pivote autour de l'arbre de rotation (303), une force de freinage est générée par une force de friction entre la surface de freinage (309) et la face d'extrémité arquée.

2. Tapis de course selon la revendication 1, **caractérisé en ce que**
le bloc pliant est pourvu d'une première partie de butée (305) et d'une seconde partie de butée (306), la première partie de butée (305) étant configurée pour limiter un premier point d'extrémité lors du processus de rotation du bloc pliant, et la seconde partie de butée (306) étant configurée pour limiter un second point d'extrémité lors du processus de rotation du bloc pliant ;
une plage de rotation du bloc pliant se situe entre le premier point d'extrémité et le second point d'extrémité,
le tapis de course présentant une pente maximale réglable lorsque le bloc pliant est situé au premier point d'extrémité, et
le tapis de course présentant une pente minimale réglable lorsque le bloc pliant est situé au second point d'extrémité.

3. Tapis de course selon la revendication 2, **caractérisé en ce que**
la première partie de butée (305) est un sommet de la partie de support (304) et, par ajustement par pression entre le sommet de la partie de support (304) et la partie inférieure du châssis de course (2), limite la rotation du bloc pliant dans une direction de rotation ; et/ou
la première partie de butée (305) est une plaque de butée (308) disposée au sommet de la partie de support (304) et, par ajustement par pression entre un côté, proche du cadre de support (301), de la plaque de butée (308) et un côté, proche de la plaque de butée (308), du cadre de support (301), limite la rotation du bloc pliant dans une direction de rotation ; et/ou
la seconde partie de butée (306) est un côté, faisant face à la partie inférieure du cadre de support (301), de la partie de support (304) et, par ajustement par pression entre ce côté de la partie de support (304) et la partie inférieure du cadre de support (301), limite la rotation du bloc pliant dans une direction de rotation.

4. Tapis de course selon la revendication 2, **caractérisé en ce qu'**une roulette (307) est disposée à une extrémité d'appui au sol de la partie de support (304).

5. Tapis de course selon la revendication 1, **caractérisé en ce que**, dans le cas où le tapis de course est positionné à la pente maximale réglable, une position où le cadre de support (301) est relié de manière rotative au bloc pliant est située au-dessus de la surface d'appui au sol.

6. Tapis de course selon la revendication 1, **caractérisé en ce qu'**une roulette (307) est disposée à une extrémité, éloignée du châssis de course (2), de la partie de support (304).

7. Tapis de course selon la revendication 1, **caractérisé en ce qu'**un patin antidérapant (310) est disposé sur la surface d'appui au sol de la partie de support (304).

8. Tapis de course selon la revendication 1, **caractérisé en ce qu'**au moins deux pieds inférieurs (4) sont disposés au bas du châssis de course (2).
